# DEMANDE DE BREVET EUROPEEN

(11) **EP 1 471 616 A1**
(43) Date de publication de la demande: **27.10.2004**
(21) Numéro de dépôt: 04352005.5
(22) Date de dépôt: 23.03.2004
(51) Int. Cl.: H02G 3/30, H02G 3/36

(54) **Dispositif de fixation sur une surface, notamment un plafond, destiné à supporter un profil perforé**

(30) Priorité: 31.03.2003 FR 0303947
(71) Demandeur: I.C.M. Group, 21500 Montbard (FR)
(72) Inventeur: Boltz, Roland, 60190 Estrees-Saint-Denis (FR); Quertelet, Stéphane, 60190 Remy (FR)
(74) Mandataire: Hartmann, Jean-Luc

(57) **Abrégé**

Ce dispositif (2) est destiné à recevoir un profil perforé.

Il comporte une platine (4) pour la fixation sur la surface et un socle porteur recevant le profil perforé.

Le socle porteur comporte une paroi (10) s'étendant sensiblement perpendiculairement à la platine (4) et munie d'au moins deux griffes (16) de même orientation destinées à coopérer avec des ouvertures correspondantes du profil perforé.

Ladite paroi (10) comporte également une patte de verrouillage (32) prédécoupée destinée à être pliée de manière à pouvoir s'introduire dans une autre ouverture en venant coopérer avec un bord de cette ouverture de manière à bloquer le profil perforé en translation.

## Description

La présente invention concerne un dispositif de fixation sur une surface, notamment un plafond, destiné à supporter un profilé perforé.

Elle concerne plus particulièrement les dispositifs de fixation appelés couramment "pendards". De tels dispositifs sont généralement fixés à un plafond à l'aide de vis. On vient alors accrocher sur ce dispositif un rail profilé en U qui sert alors par exemple de montant de structure. Cette structure est utilisée par exemple pour porter des chemins de câbles ou similaire. On vient ainsi fixer sur le rail profilé suspendu au plafond par exemple des consoles ou équerres.

La plupart des dispositifs de ce genre commercialisés actuellement comportent une semelle de tête en tôle destinée à être fixée à un plafond à l'aide de vis. Cette semelle comporte une platine plane destinée à être fixée au plafond ainsi qu'un socle porteur faisant saillie d'un côté de cette platine et destiné à recevoir le rail profilé perforé. La fixation du rail profilé sur le socle porteur se fait généralement à l'aide de boulons. Le document EP-0 813 279 révèle un exemple d'une telle structure.

L'inconvénient principal de ces structures est qu'il est nécessaire de prévoir des boulons pour venir y fixer les rails profilés qu'elles supportent. Comme déjà indiqué, ces dispositifs de fixation sont destinés à être fixés à un plafond. La personne chargée de venir accrocher le rail profilé sur le dispositif de fixation doit emporter avec elle non seulement le rail à monter mais également les boulons correspondants et les outils (clés) pour la mise en place du rail. Cette opération de fixation est en outre mal aisée car l'opérateur doit travailler avec les bras levés.

La présente invention a alors pour but de fournir un dispositif de fixation destiné à recevoir un rail profilé permettant un montage facile de ce dernier et pour lequel il n'est de préférence pas nécessaire de prévoir des boulons, ou autres moyens de fixation, pour solidariser le rail profilé au dispositif de fixation.

A cet effet, elle propose un dispositif de fixation destiné d'une part à être fixé sur une surface, notamment un plafond, et d'autre part à recevoir un profil perforé, comportant une platine pour la fixation sur la surface et un socle porteur recevant le profil perforé, ledit socle porteur comportant une paroi s'étendant sensiblement perpendiculairement à la platine et au moins deux griffes de même orientation destinées à coopérer avec des ouvertures correspondantes du profil perforé.

Selon l'invention, ladite paroi comporte une patte de verrouillage prédécoupée destinée à être pliée de manière à pouvoir s'introduire dans une autre ouverture en venant coopérer avec un bord de cette ouverture de manière à bloquer le profil perforé en translation.

Une fois un tel support fixé à un plafond, pour venir fixer un profil perforé, il suffit de faire coopérer les griffes du socle porteur avec les ouvertures correspondantes du profil perforé pour venir accrocher le profil au socle porteur. Pour ensuite solidariser ce profil perforé avec le dispositif de fixation, il suffit de plier la patte de verrouillage pour qu'elle s'introduise dans l'autre ouverture du profil perforé et vienne bloquer ce dernier et le rendre solidaire du dispositif de fixation. Comme on peut le remarquer, aucun accessoire n'est nécessaire pour la fixation du profil perforé sur son dispositif de fixation. Il suffit d'un outil, par exemple un tournevis, pour plier la patte de verrouillage.

La présente invention concerne par exemple un dispositif de fixation destiné à recevoir un profil perforé de section transversale en U, les ouvertures du profil étant réalisées sur les branches du U. Dans ce cas, le socle porteur comporte avantageusement deux parois parallèles, la distance séparant ces parois parallèles correspondant à la distance séparant les branches du profil en U, chacune desdites parois parallèles présente au moins une griffe, toutes les griffes présentant une même orientation dans l'espace, et une desdites parois parallèles au moins présente une patte de verrouillage. Dans cette forme de réalisation adaptée à un profil en U, les deux parois parallèles peuvent être reliées par une base s'étendant perpendiculairement d'une part à chacune desdites parois parallèles et d'autre part à la platine de fixation.

Toujours dans le cas où le dispositif de fixation est destiné à un profil en U, on peut prévoir que le socle porteur se présente sous la forme d'un tube de section sensiblement rectangulaire dont deux parois latérales opposées correspondent aux dites parois parallèles, que les griffes de l'une desdites parois parallèles font saillie à l'intérieur du socle porteur tandis que les griffes de l'autre desdites parois parallèles font saillie hors du socle, et que le socle porteur présente une fente longitudinale disposée à un angle du socle porteur, du côté de la paroi portant des griffes en saillie vers l'extérieur du socle. Dans cette dernière forme de réalisation, la platine de fixation est par exemple constituée de deux pattes, chacune de ces pattes s'étendant à angle droit à partir d'une extrémité d'une paroi du tube formant le socle porteur. Cette forme de réalisation est avantageuse car elle permet de réaliser le dispositif de fixation par découpage et pliage d'une tôle.

Dans un dispositif de fixation selon l'invention, les griffes sont par exemple réalisées à partir d'une languette découpée dans la paroi correspondante et repliée selon deux lignes de pliage transversales, de telle sorte que l'extrémité libre de la languette se trouve sensiblement dans un plan parallèle au plan de ladite paroi, la distance séparant ladite extrémité de languette et ladite paroi correspondant à l'épaisseur du profil perforé destiné à être fixé sur ledit socle porteur.

La patte de verrouillage est de préférence alignée avec les griffes réalisées sur la même paroi. Elle est alors avantageusement destinée à être pliée à partir d'une ligne de pliage qui s'étend perpendiculairement aux lignes de pliage des griffes.

Pour un meilleur verrouillage et pour compenser les tolérances de fabrication d'une part au niveau du dispositif de fixation et d'autre part au niveau du profil perforé, la patte de verrouillage présente de préférence la forme d'un trapèze.

Des détails et avantages de la présente invention ressortiront mieux de la description qui suit, faite en référence au dessin schématique annexé sur lequel :
La figure 1 est une vue en perspective d'un dispositif selon l'invention,
La figure 2 est une vue de dessus du dispositif de la figure 1,
La figure 3 est une vue selon la flèche III de la figure 2,
La figure 4 est une vue selon la flèche IV de la figure 3,
La figure 5 est une vue en perspective du dispositif selon l'invention coopérant avec un rail profilé en U,
La figure 6 est une vue en coupe selon la ligne de coupe VI-VI de la figure 2,
La figure 7 est une vue selon la flèche VII de la figure 6,
La figure 8 est une vue partielle en élévation d'un profilé en U adapté à être fixé sur le dispositif des figures 1 à 4, et
La figure 9 est une vue en coupe selon la ligne de coupe IX-IX de la figure 5.

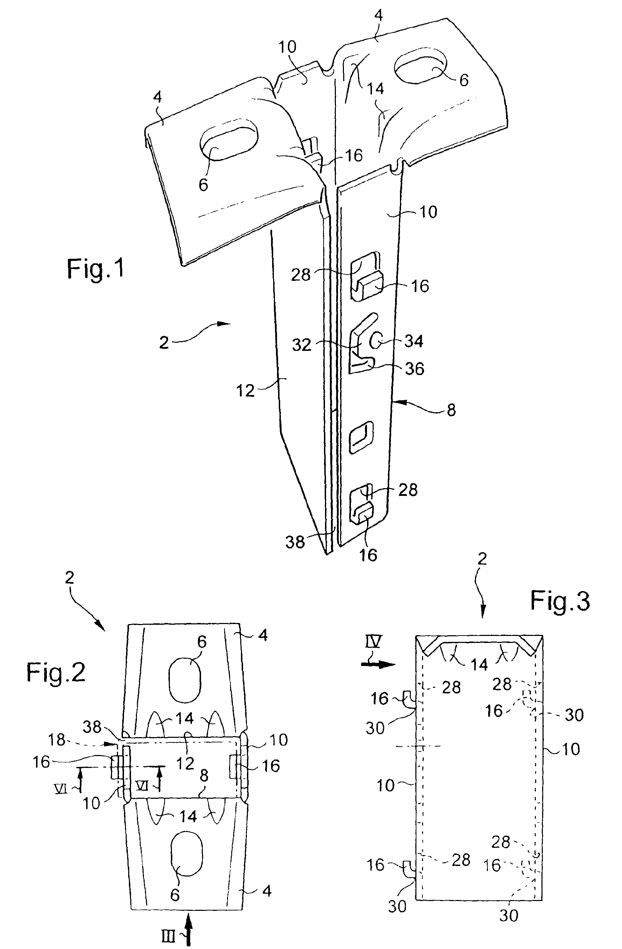

Les figures 1 à 4 montrent sous divers angles une forme de réalisation préférentielle d'un dispositif de fixation 2 selon la présente invention. Ce dispositif de fixation est obtenu par découpe et pliage d'un flan en tôle métallique. Il comporte de façon générale une platine de fixation sur une surface et un socle porteur.

La platine de fixation est constituée ici de deux pattes de fixation 4 disposées toutes deux sensiblement dans un même plan. Chacune de ces pattes de fixation 4 présente, sensiblement en son centre, un trou oblong 6 destiné au passage d'une vis pour permettre la fixation de la patte de fixation 4 correspondante sur une surface, notamment un plafond. Comme on peut le remarquer au dessin, les bords longitudinaux de chaque patte de fixation 4 sont repliés à environ 45° afin d'obtenir une meilleure rigidité.

Le socle porteur sert à la fixation d'un rail profilé de telle sorte que lorsque les pattes de fixation 4 sont vissées à un plafond, le rail profilé s'étende verticalement et forme un montant utilisé lui-même par la suite pour le support d'objets. Ce socle porteur est plus particulièrement destiné à un rail présentant une section en U et comportant une base et deux branches latérales. Des perforations de forme rectangulaire sont prévues à intervalles réguliers dans les branches de ce profilé et sont disposées de telle sorte que les ouvertures d'une branche fassent face aux ouvertures réalisées dans l'autre branche. Un tel rail profilé est également connu en France sous le nom d"'échelle EDF".

Comme on peut le constater sur le dessin, le socle porteur présente une forme générale d'un tube à section rectangulaire. Ce tube s'étend perpendiculairement aux pattes de fixation 4.

Le socle porteur comporte une base 8, deux parois latérales 10, et un couvercle 12.

La base 8 est opposée au couvercle 12. Ces deux faces du tube formant le socle porteur correspondent aux grands côtés de la section rectangulaire de ce tube. Il s'agit de deux faces planes ne présentant pas d'ouverture. Elles portent chacune à leur extrémité supérieure (on suppose ici le dispositif de fixation en place contre un plafond) les pattes de fixation 4. Ces dernières forment un angle droit avec la base 8 et le couvercle 12. Des nervures de rigidification 14 sont prévues entre chaque patte de fixation 4 et la face correspondante du socle porteur.

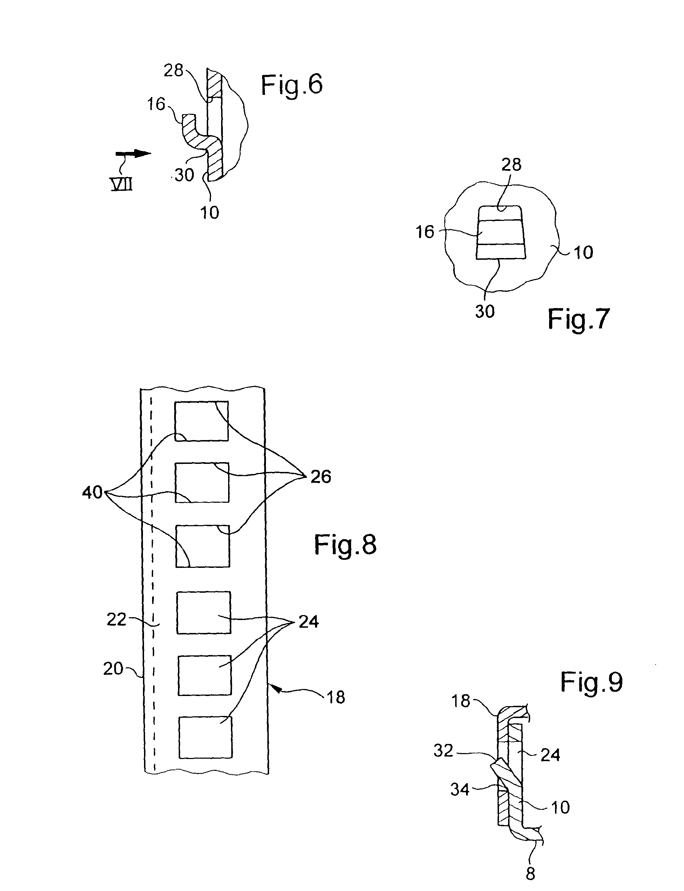

Chaque paroi latérale 10 présente deux griffes 16. Ces dernières sont destinées à coopérer avec des ouvertures réalisées dans un rail profilé tel que décrit plus haut. Un tel rail est représenté en vue de côté sur la figure 8. Comme indiqué plus haut, il s'agit d'un profilé 18, destiné à être placé verticalement à la manière d'un pilier en venant se fixer sur le dispositif de fixation selon l'invention. Il est réalisé par exemple en tôle pliée et présente une section en forme de U avec une âme 20 et deux branches parallèles 22. Dans chacune des branches 22 sont ménagées des ouvertures 24, ici de forme générale rectangulaire, disposées en ligne selon un certain pas.

Les griffes 16 d'une même paroi latérale 10 sont espacées d'une distance correspondant à un multiple du pas d'espacement des ouvertures 24. Ces griffes 16 sont agencées de manière à pouvoir coopérer chacune avec un bord 26 d'une ouverture 24. Les figures 6 et 7 représentent plus en détail une griffe 16 d'une paroi latérale 10. Chaque griffe 16 est obtenue par découpe sur trois côtés d'une ouverture 28 rectangulaire et pliage à partir d'une ligne 30 correspondant au quatrième côté non découpé de l'ouverture 28. Le pliage est effectué deux fois à 90° de telle sorte que la griffe 16 vienne s'étendre parallèlement à la paroi latérale 10 et à une distance de celle-ci correspondant globalement à l'épaisseur du bord des ouvertures 24 du profilé 18 qui correspond ici à l'épaisseur des branches 22 de ce profilé 18.

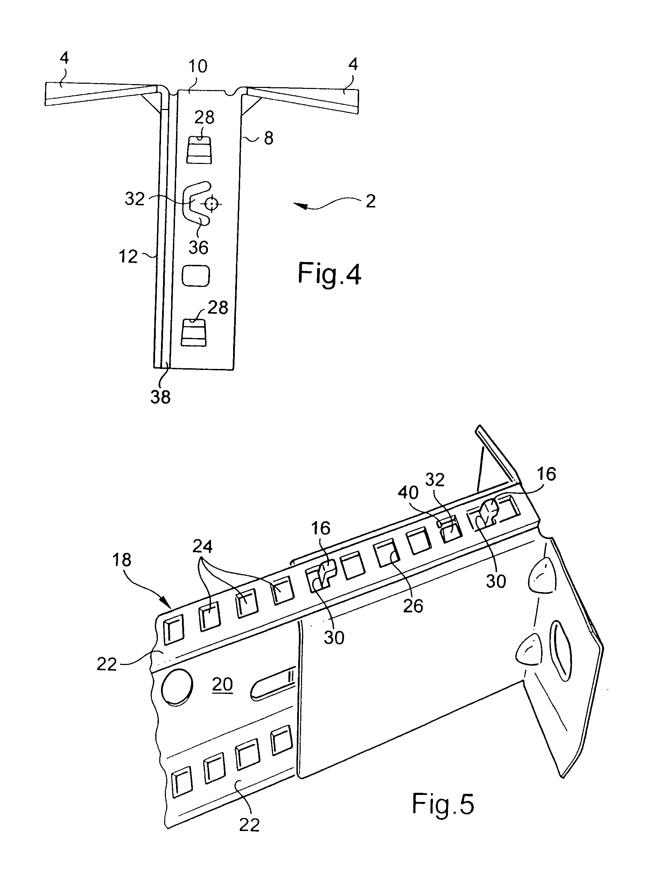

Les griffes 16 étant destinées à porter le profilé 18, la ligne 30 de pliage est réalisée au niveau du bord de l'ouverture 28 correspondante opposé aux pattes de fixation 4. Les deux pliages réalisés sont à 90° mais le second pliage est réalisé dans le sens opposé du premier pliage. La griffe 16 est ainsi orientée vers les pattes de fixation 4 et se trouve à hauteur de l'ouverture 28 à partir de laquelle elle a été réalisée. Ainsi, lorsque le profilé 18 est monté sur son socle porteur (figure 5), le bord 26 d'une ouverture 24 repose sur la griffe 16.

Les quatre griffes 16 du socle porteur sont orientées de la même manière dans l'espace. On retrouve ainsi deux griffes 16 correspondant à une paroi latérale 10 en saillie à l'intérieur du socle porteur tandis que les deux autres griffes 16 correspondant à l'autre paroi latérale 10 font saillie vers l'extérieur du socle porteur. La distance séparant les deux parois latérales 10 est sensiblement égale ici à la distance séparant les deux branches parallèles 22 du profilé 18.

Pour pouvoir immobiliser complètement un profilé 18 sur son socle porteur, ce dernier présente une patte de verrouillage 32. Celle-ci est aménagée, dans la forme de réalisation préférentielle représentée au dessin, sur une seule paroi latérale 10. Il s'agit de la paroi latérale comportant des griffes 16 en saillie vers l'extérieur du socle porteur. Cette patte de verrouillage 32 est alignée avec les griffes 16 présentes sur la même paroi latérale 10 et est placée de manière à pouvoir coopérer avec l'une des ouvertures 24 alignée avec les ouvertures 24 coopérant avec les griffes 16 de la même paroi latérale 10.

Dans la forme de réalisation représentée (figures 4 et 9), la patte de verrouillage 32 est découpée dans ladite paroi latérale 10. La découpe correspondante est en forme de U de manière à ménager une ligne de pliage 34 dans le plan de la paroi latérale 10 correspondante perpendiculaire aux lignes de pliage 30 des griffes 16. Un jeu 36 est prévu entre le bord libre de la patte de verrouillage 32 et le bord de la découpe, ces deux bords étant parallèles de manière à pouvoir y insérer un outil, par exemple un tournevis, pour réaliser le pliage de la patte de verrouillage 32.

Le socle porteur présente également une fente 38 s'étendant longitudinalement sur toute la longueur du socle porteur. Cette fente 38 est réalisée à l'angle entre le couvercle 12 et la paroi latérale 10 portant les griffes en saillie hors du socle porteur. Cette fente 38 est de largeur suffisante pour permettre l'introduction, au moins partielle, du profilé 18 à l'intérieur du socle porteur. Cette fente présente donc une largeur supérieure à l'épaisseur de la tôle utilisée pour réaliser le profilé 18. On prévoit par exemple une fente 38 de largeur double par rapport à l'épaisseur de cette tôle.

Le dispositif de fixation décrit plus haut est alors utilisé de la manière suivante. Ce dispositif est tout d'abord fixé à un plafond. Des vis traversant les ouvertures 6 des pattes de fixation 4 sont utilisées à cet effet. Les parois du socle porteur s'étendent alors perpendiculairement au plafond. Le profilé 18 est ensuite fixé sur le socle porteur du dispositif selon l'invention. Pour ce faire, il est partiellement introduit dans ce socle porteur. On présente à cet effet une extrémité du profilé 18 à fixer à l'extrémité libre ouverte du socle porteur en plaçant l'âme 20 du profilé 18 au niveau de la fente 38 du socle porteur. Une partie du profilé 18 vient coulisser à l'intérieur de ce socle. Durant ce coulissement, l'âme 20 du profilé 18 est parallèle au couvercle 12 du socle porteur. Ce couvercle 12 sert de guide dans le mouvement du profilé 18. Ce dernier est ensuite accroché au socle porteur en faisant pénétrer chaque griffe 16 dans une ouverture 24 correspondante des branches 22 du profilé 18. Une fois les griffes 16 à l'intérieur des ouvertures 24 correspondantes du profilé 18, le profilé 18 peut être relâché et, sous l'effet de la gravité, le profilé 18 se trouve en place. Pour verrouiller cette position, la patte de verrouillage 32 est repliée vers l'intérieur de l'ouverture 24 se trouvant face à elle (figure 9).

La patte de verrouillage 32 présente avantageusement une forme trapézoïdale. Cette forme permet de rattraper un éventuel jeu entre l'altitude à laquelle se trouve la patte de verrouillage 32 et l'ouverture 24 correspondante du profilé 18. En repliant cette patte de verrouillage 32, un bord de celle-ci vient alors reposer sur un bord 40 d'une ouverture 24 réalisée dans le profilé 18. Dans une ouverture 24, le bord 40 correspond à un bord opposé au bord 26 mentionné précédemment et destiné à coopérer avec une griffe 16.

Une fois la patte de verrouillage 32 repliée, le profilé 18 est fixé et n'a plus de degré de liberté. Ce profilé 18 peut alors servir de pilier et recevoir par exemple une console pour supporter un chemin de câbles.

La forme de réalisation décrite ci-dessus est avantageuse car elle peut être réalisée à partir d'une tôle par découpage et pliage de celle-ci. La forme de réalisation décrite ci-dessus présente une rigidité importante. Elle permet aussi un bon maintien du rail profilé venant se fixer sur ledit support. Cette fixation se réalise de plus sans aucun dispositif (boulons par exemple) accessoire. La personne chargée de mettre en place les piliers d'une structure prévue par exemple pour supporter un chemin de câbles vient ainsi simplement fixer dans un premier temps les dispositifs de fixation au plafond. La fixation des piliers opérée dans un second temps est très rapide. En effet, un simple mouvement permet d'accrocher le pilier au dispositif de fixation correspondant et en repliant une patte de verrouillage la fixation est achevée. Cette fixation est donc rapide et ne nécessite que l'utilisation d'un tournevis. Ce dernier fait partie de l'équipement de base d'un monteur qui en a toujours un dans l'une de ses poches.

La forme de réalisation à partir d'une tôle découpée et pliée est particulièrement avantageuse en ce que la tôle de départ peut être une tôle galvanisée ou électrozinguée, par exemple obtenue par galvanisation en continu selon le procédé Sendzimir (norme NF/EN/DIN 10142), le dispositif de fixation résultant étant alors protégé de la corrosion sans nécessité d'un traitement anticorrosion, une fois le dispositif de fixation fabriqué.

La présente invention ne se limite pas à la forme de réalisation préférentielle décrite ci-dessus à titre d'exemple non limitatif. Elle concerne également toutes les variantes de réalisation à la portée de l'homme du métier dans le cadre des revendications ci-après.

Ainsi par exemple, le dispositif de fixation selon l'invention pourrait être obtenu par soudage de tôles plutôt que par découpe et pliage. On peut également envisager de réaliser un tel dispositif de fixation dans un matériau différent que de la tôle métallique. Un procédé de fabrication adapté (moulage par injection, etc...) peut être envisagé.

La forme du dispositif de fixation peut également être modifiée. Dans la forme décrite, les pattes de fixation sont rattachées à la base et au couvercle du socle porteur décrit. Elles pourraient être également rattachées aux parois latérales de celui-ci. On pourrait également prévoir quatre pattes de fixation. Toute variante à ce niveau est envisageable.

Le socle porteur ne se présente pas forcément sous la forme d'un tube à section rectangulaire. Cette forme est une forme préférentielle adaptée à un profilé appelé couramment en France "échelle EDF". Une autre forme de réalisation est à prévoir pour un dispositif de fixation devant être utilisé avec un profilé d'un autre type.

## Revendications

1. Dispositif de fixation (2) destiné d'une part à être fixé sur une surface, notamment un plafond, et d'autre part à recevoir un profil perforé (18), comportant une platine (4) pour la fixation sur la surface et un socle porteur recevant le profil perforé (18), ledit socle porteur comportant une paroi (10) s'étendant sensiblement perpendiculairement à la platine (4) et au moins deux griffes (16) de même orientation destinées à coopérer avec des ouvertures (24) correspondantes du profil perforé (18),
**caractérisé en ce que** ladite paroi (10) comporte une patte de verrouillage (32) prédécoupée destinée à être pliée de manière à pouvoir s'introduire dans une autre ouverture (24) en venant coopérer avec un bord (40) de cette ouverture (24) de manière à bloquer le profil perforé (18) en translation.

2. Dispositif de fixation selon la revendication 1, **caractérisé en ce qu'**il est destiné à recevoir un profil perforé (18) de section transversale en U, les ouvertures (24) du profil étant réalisées sur les branches (22) du U, **en ce que** le socle porteur comporte deux parois parallèles (10), la distance séparant ces parois parallèles (10) correspondant à la distance séparant les branches (22) du profil (18) en U, **en ce que** chacune desdites parois parallèles (10) présente au moins une griffe (16), toutes les griffes (16) présentant une même orientation dans l'espace, et **en ce qu'**une desdites parois parallèles (10) au moins présente une patte de verrouillage (32).

3. Dispositif de fixation selon la revendication 2, **caractérisé en ce que** les deux parois parallèles (10) sont reliées par une base (8) s'étendant perpendiculairement d'une part à chacune desdites parois parallèles (10) et d'autre part à la platine de fixation (4).

4. Dispositif de fixation selon l'une des revendications 2 ou 3, **caractérisé en ce que** le socle porteur se présente sous la forme d'un tube de section sensiblement rectangulaire dont deux parois latérales (10) opposées correspondent aux dites parois parallèles, **en ce que** les griffes (16) de l'une desdites parois parallèles (10) font saillie à l'intérieur du socle porteur tandis que les griffes (16) de l'autre desdites parois parallèles (10) font saillie hors du socle, et **en ce que** le socle porteur présente une fente (38) longitudinale disposée à un angle du socle porteur, du côté de la paroi (10) portant les griffes (16) en saillie vers l'extérieur du socle.

5. Dispositif de fixation selon la revendication 4, **caractérisé en ce que** la platine de fixation est constituée de deux pattes (4), chacune de ces pattes (4) s'étendant à angle droit à partir d'une extrémité d'une paroi du tube formant le socle porteur.

6. Dispositif de fixation selon le revendication 5, **caractérisé en ce qu'**il est réalisé par découpage et pliage d'une tôle.

7. Dispositif de fixation selon l'une des revendications 1 à 6, **caractérisé en ce que** les griffes (16) sont réalisées à partir d'une languette découpée dans la paroi (10) correspondante et repliée selon deux lignes de pliage (30) transversales, de telle sorte que l'extrémité libre de la languette se trouve sensiblement dans un plan parallèle au plan de ladite paroi (10), la distance séparant ladite extrémité de languette et ladite paroi correspondant à l'épaisseur du profil perforé (18) destiné à être fixé sur ledit socle porteur.

8. Dispositif de fixation selon l'une des revendications 1 à 7, **caractérisé en ce que** la patte de verrouillage (32) est alignée avec les griffes (16) réalisées sur la même paroi (10).

9. Dispositif de fixation selon la revendication 7, **caractérisé en ce que** la patte de verrouillage (32) est destinée à être pliée à partir d'une ligne de pliage (34) qui s'étend perpendiculairement aux lignes de pliage (30) des griffes (16).

10. Dispositif de fixation selon l'une des revendications 1 à 9, **caractérisé en ce que** la patte de verrouillage (32) présente la forme d'un trapèze.
